# EUROPEAN PATENT SPECIFICATION

(11) **EP 1 878 887 B1**
(45) Date of publication and mention of the grant of the patent: **15.04.2009**
(21) Application number: 06253635.4
(22) Date of filing: 12.07.2006
(51) Int. Cl.: F01N 3/20, B01D 53/94

(54) **Fluid dosing device**
Fluiddosiervorrichtung
Dispositif de dosage de fluide

(43) Date of publication of application: 16.01.2008
(60) Divisional application: 09154086.4
(73) Proprietor: Delphi Technologies, Inc., Troy, Michigan 48007 (US)
(72) Inventor: Cooke, Michael, Gillingham Kent ME7 1DR (GB)
(74) Representative: Gregory, John David Charles

(56) References cited:
- EP-A- 1 283 332
- WO-A-20/05005799
- WO-A-20/05073527

## Description

This invention relates to a device for dosing a gas flow with a fluid. In particular, the invention relates to a device for achieving optimum dispersion and mixing of a reagent in a flow of exhaust gases in order to reduce harmful exhaust gas emissions.

The emission of nitrogen oxide (NOₓ) compounds in engine exhausts has long been the focus for health professionals and regulatory agencies worldwide. In many locations, regulations require stringent reductions of NOₓ levels in new equipments. NOₓ emissions may be found in a variety of systems such as internal combustion engines, gas turbine exhaust, lean bum engines, industrial boilers, process heaters or other process streams.

In order to reduce NOₓ emissions, it is known to use a Selective Catalyic Reduction (SCR) device to treat an exhaust flow and to significantly reduce nitrous oxide (NOₓ) emissions. In an SCR system a reducing agent, for example urea solution, is dosed into the exhaust gas flow upstream of an SCR catalyst. This reducing agent is then usually reacted in the presence of a catalyst downstream of the injection point in an SCR device. Within the SCR device NOₓ compounds are then reduced to nitrogen. WO2004111401 discloses such a device.

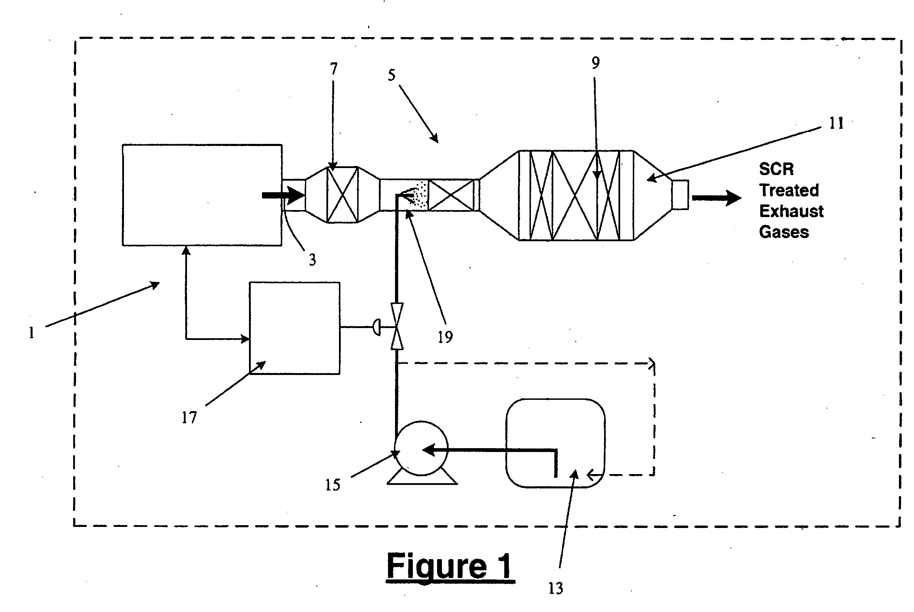

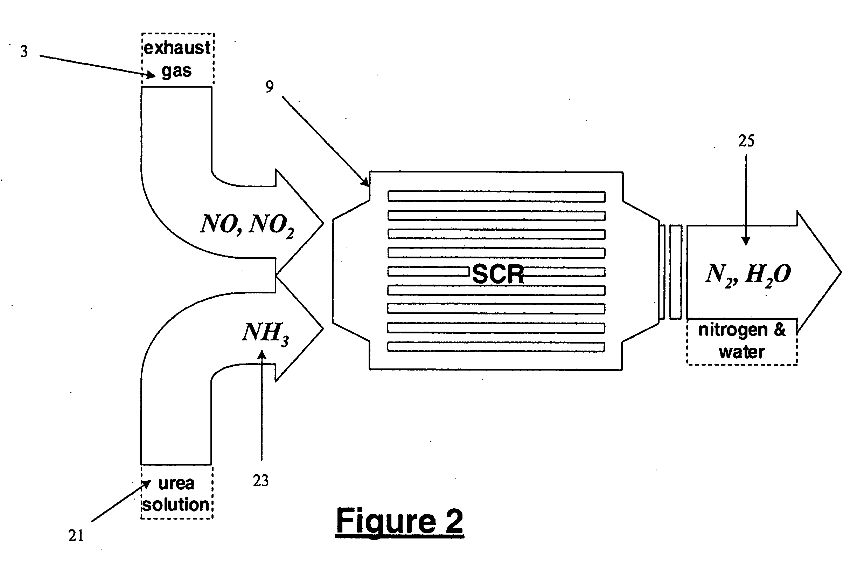

The general operation of an SCR device is shown in Figures 1 and 2.

In Figure 1, a diesel engine 1 produces an exhaust flow comprising various exhaust gases 3. The exhaust gases are conveyed through an exhaust system, indicated generally at 5, comprising an oxidation catalyst device 7, a selective reduction catalyst device 9 and a slip catalyst 11.

The oxidation catalyst device 7 is a flow through device that consists of a canister containing a honeycomb-like structure or substrate. The substrate has a large surface area that is coated with an active catalyst layer. This layer contains a small, well dispersed amount of precious metals such as platinum or palladium. As the exhaust gases traverse the catalyst, carbon monoxide, gaseous hydrocarbons and liquid hydrocarbon particles (unburned fuel and oil) are oxidized, thereby reducing harmful emissions.

The SCR device 9 performs Selective Catalytic Reduction (SCR) of nitrogen oxide (NOx) using ammonia (derived from a source of urea) as a chemical reductant. SCR is a proven technical and economic solution for the heavy-duty market to meet Euro IV and Euro V emission requirements for diesel-powered commercial vehicles in Europe.

The slip catalyst 11 is located downstream of the SCR device 9 to clean up any unreacted ammonia.

Urea for the SCR device 9 is stored in a tank 13 which is in fluid communication with the exhaust system 5. A pump 15 is provided to pump urea from the tank 13 to the exhaust system 5. The supply of urea is controlled by a control unit 17, for example the engine control unit, which receives engine speed and other engine parameters from the engine 1. An injection device 19 (also referred to herein as a fluid dosing device) is used to inject the urea into the exhaust flow.

The operation of the SCR device is shown in more detail in Figure 2. Exhaust gas 3, comprising for example NO and NO₂, mixes with urea solution 21 from the urea tank 13. When the urea solution 21 and the hot exhaust gas 3 mix hydrolysis and thermal decomposition processes produce ammonia 23, NH₃.

The ammonia 23 and exhaust gases 3 then enter the SCR device 9 which reduces the nitrogen oxides to nitrogen. Downstream of the SCR device 9 the exhaust flow comprises a mixture of nitrogen and water, as indicated at 25.

For maximum efficiency in the reduction reaction it is important that the reducing agent is dispersed evenly throughout the exhaust flow over a wide range of exhaust and reducing agent flow speeds and conditions. As shown in Figure 1, there is often another catalyst upstream of the urea injection point, which tends to smooth out the exhaust flow, causing low turbulences in the exhaust stream. In such a low turbulence environment there is a tendency for there to be incomplete mixing between the exhaust gases and the reducing agent.

DE10060808 describes a turbulence generating feature which comprises a rotating blade that acts to deviate the exhaust gas from its flow direction and create inhomogeneities in the exhaust gas stream. However, such a device tends to create a permanent back-pressure within the exhaust system which leads to a loss of engine efficiency.

DE19856366 shows a further arrangement in which the spray of reducing agent is perpendicular to the exhaust flow. In such arrangements, if the spray is optimised to fill the exhaust pipe at relatively low exhaust velocities then when the exhaust velocity is increased to higher levels the spray is deflected resulting in incomplete mixing.

It is therefore an object of the present invention to provide a fluid dosing device for introducing a fluid to a gas flow that substantially overcomes or mitigates the above mentioned problems.

According to a first aspect of the present invention there is therefore provided an exhaust pipe comprising a gas flow having a given flow direction, and a fluid dosing device for introducing a fluid into the gas flow, the dosing device comprising: input means for receiving the fluid from a source of fluid; nozzle means for injecting the fluid into the gas flow, the nozzle means comprising valve means arranged to move between a first position in which the valve means seals the nozzle means and a second open position in which injection of fluid into the gas flow can take place wherein the fluid dosing device is arranged to inject fluid into the gas flow in a direction which is substantially counter to the flow direction of the gas flow.

The first aspect of the invention provides for a fluid dosing device that injects a fluid into a gas flow in such a manner that the fluid injection direction is substantially counter to the gas flow. Injecting the fluid counter to the gas flow allows far more efficient mixing of the fluid and the gases in the gas flow than in prior art arrangements.

Since the nozzle means is, at least partially, facing into the gas flow the possibility of contaminants or material deposits entering the fluid dosing device via the nozzle means is increased compared to prior art systems. In order to counteract this, the nozzle means is provided with a valve member which is arranged to move between a first (closed) position in which it seals the nozzle means from the gas flow and a second (open) position which allows injection into the gas flow to take place. It is noted that the opening and closing action of the valve means in use tends to clean the valve means and nozzle means of any material deposits that may have formed.

Conveniently, the nozzle means comprises a sealing surface that interacts with a complementary shaped valve surface on the valve means to seal the nozzle means in the first position to prevent fluid from exiting the fluid dosing device and to prevent gas from the gas flow entering the nozzle means.

Conveniently, the valve means is biased towards the first position by a suitable biasing means, such as a spring. Fluid pressure within the fluid dosing device may be arranged to provide a force opposing the biasing means such that when the fluid pressure exceeds a threshold valve the valve means is able to move to the second (open) position and fluid is therefore injected into the gas flow.

Preferably, the valve means and nozzle means can be shaped such that the injected fluid assumes the form of a hollow conical spray. Such a spray pattern is likely to mix better than the individual sprays described in the prior art.

A further means of preventing material deposits from forming on the nozzle of the fluid dosing device is to form a pocket a clean air around the nozzle means. The fluid dosing device may therefore conveniently be provided with an air supply means which injects (clean) air into the gas flow in the region of the nozzle means.

The air supply means constitutes an alternative solution to the problem of material deposits on the nozzle means (the provision of a valve member being the alternative solution).

Therefore, according to another embodiment of the present invention, the dosing device comprises input means for receiving the fluid from a source of fluid, nozzle means for injecting the fluid into the gas flow, and air supply means arranged to inject air into the gas flow in the region of the nozzle means wherein the fluid dosing device is arranged to inject fluid into the gas flow in a direction which is substantially counter to the flow direction of the gas flow.

Conveniently, the fluid dosing device is received in a complementary shaped mounting. Preferably, the mounting arrangement is designed such that there is an air gap between the dosing device and the mounting. The air gap may conveniently be connected to a source of air and be open to the gas flow in the region of the nozzle means. The air gap and source of air together form an air supply means that, in use, supplies air from the air source through the air gap to the nozzle region of the dosing device in order to form an air pocket around the nozzle.

According to the invention, the gas flow is conveyed by an exhaust pipe in use. The fluid dosing device may be linear in shape and received in a complementary shaped mounting formed in a wall of the exhaust pipe.

For such a linear device, the nozzle means may preferably be closer to the wall of the exhaust pipe than the centre of the pipe.

The fluid dosing device may alternatively be substantially C shaped and arranged such that the nozzle of the device is substantially in the centre of the exhaust pipe.

The gas flow may comprise NOx-containing exhaust gases.

According to another embodiment of the present invention there is provided an exhaust pipe for conveying a gas flow in a given flow direction, the pipe comprising a mounting arrangement defining a bore for receiving a complementary shaped fluid dosing device as described above, the mounting arrangement being arranged such that the fluid dosing device injects fluid into the exhaust pipe in a direction which is substantially counter to the flow direction.

Conveniently, the exhaust pipe further comprises an air inlet formed in the wall of the exhaust pipe upstream of the fluid dosing device and connected to a source of air. The air inlet and source of air together form an air supply means arranged such that, in use, air may be injected from the source of air into the exhaust pipe such that a pocket of air is formed in the region of the nozzle means of the fluid dosing device.

Alternatively, instead of an air inlet located separate from the fluid dosing device, the air supply means may comprise a clearance (air gap) between the inner surface of the mounting arrangement and the outer surface of the fluid dosing device. The clearance may be open to the exhaust pipe in the region of the nozzle means and additionally may be connected to a source of air. A pocket of clean air may therefore be formed in the region of the nozzle means by injecting air from the air source through the clearance into the exhaust flow.

According to a second aspect of the present invention there is provided a catalytic reduction system comprising an exhaust pipe according to the first aspect of the present invention and at least one selective catalytic reduction converter, said converter being located in the exhaust pipe downstream of the fluid dosing device.

The catalytic reduction system may further comprise a reducing agent reservoir for holding a reducing agent (i.e. the "fluid" injected by the fluid dosing device) and a reducing agent pump for delivering reducing agent from the reservoir to the fluid dosing device.

According to a third aspect of the present invention there is provided a method of using a fluid flow device of the type forming part of the first aspect of the invention to introduce a fluid into a gas flow having a given flow direction, the method comprising: receiving fluid from a source of fluid; injecting the fluid into the gas flow wherein the fluid is injected into the gas flow in a direction having at least a component which is counter to the flow direction of the gas flow.

According to a fourth aspect of the present invention there is provided a carrier medium for carrying a computer readable code for controlling a processor, computer or other controller to carry out the method of the third aspect of the invention.

The invention extends to a vehicle comprising an exhaust pipe according to the first aspect of the present invention and also to an engine management unit for use with a vehicle, the unit comprising a fluid dosing device forming part of to the first aspect of the present invention.

In order that the invention may be more readily understood, reference will now be made, by way of example, to the accompanying drawings in which:
Figure 1 is a schematic representation of a known exhaust system comprising a selective catalytic reduction (SCR) device;
Figure 2 is an enlarged view of the SCR device shown in Figure 1;
Figure 3 shows a known fluid dosing device for introducing a reducing agent into an exhaust flow;
Figure 4 shows the fluid dosing device of Figure 3 at an increased exhaust flow velocity;
Figure 5 shows a further fluid dosing device for introducing a reducing agent into an exhaust flow;
Figure 6 shows the fluid dosing device of Figure 5 at an increased exhaust flow velocity;
Figure 7 shows a fluid dosing device in accordance with an embodiment of the present invention;
Figure 8 shows a valve member of the nozzle region of the fluid dosing device of Figure 7 in a first position;
Figure 9 shows the valve member of the nozzle region of the fluid dosing device of Figure 7 in a second position;
Figure 10 shows the fluid dosing device of Figure 7 at an increased exhaust flow velocity;
Figure 11 shows a further fluid dosing device in accordance with an embodiment of the present invention;
Figure 12 shows the fluid dosing device of Figure 11 at an increased exhaust flow velocity;
Figure 13 shows an exhaust pipe including a further fluid dosing device in accordance with an embodiment of the present invention and an additional air supply passage;
Figure 14 shows a further fluid dosing device incorporating an air supply means in accordance with an embodiment of the present invention;
Figure 15 shows a C-shaped fluid dosing device incorporating an air supply means in accordance with an embodiment of the present invention.

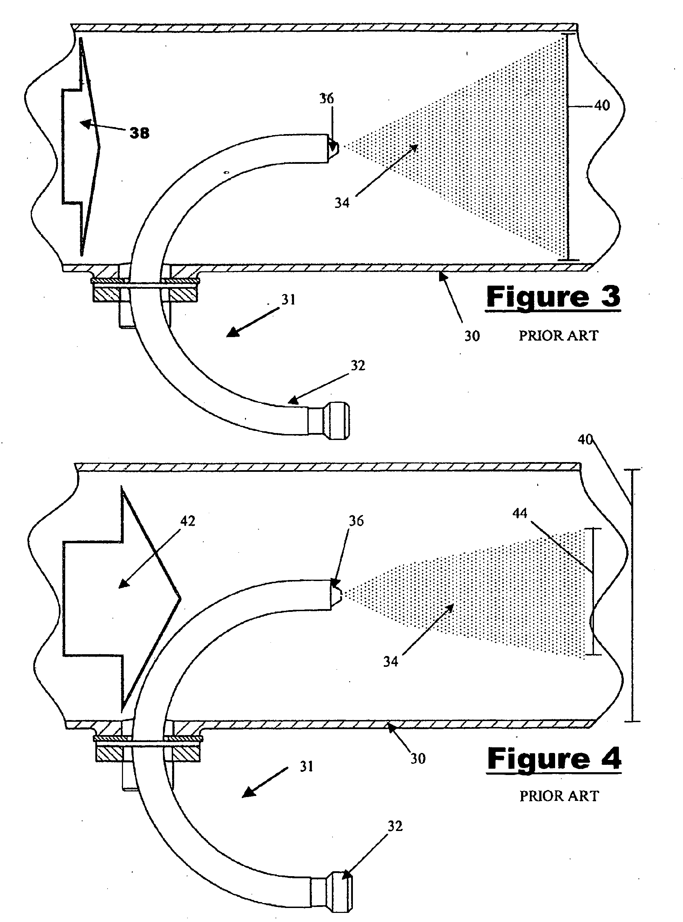

Figure 3 shows a known spray arrangement for introducing a reducing agent into an exhaust flow.

In Figure 3 a section through an exhaust pipe 30 is shown. A fluid dosing device, which shall be referred to with reference to the drawings as an injection device (generally indicated as 31), for injecting the reducing agent is provided. The injection device 31 comprises a nozzle body 32 which is shown passing through the lower wall of the pipe 30 and is of a generally C shaped construction. A spray 34 of reducing agent is shown entering the interior of the exhaust pipe 30 from a nozzle 36 of the injection device 31. The nozzle 36 is generally in the centre of the pipe 30.

The direction of the exhaust flow is indicated by the arrow 38. It is noted that the injection device 31 introduces the reducing agent in the same direction as the exhaust gas flow 38.

In Figure 3 the velocity of the exhaust flow is relatively low and it can be seen that the spray 34 is optimised to achieve full mixing of the spray with the exhaust gases, as indicated by the fact that the spray 34 extends across the diameter 40 of the pipe 32.

Figure 4 shows the same spray arrangement as Figure 3 and like numerals have been used to denote like features. In Figure 4, the direction of the exhaust flow is the same as in Figure 3. However, the velocity of the exhaust flow is greater than in Figure 3, as indicated by the larger arrow 42. This results in a problem since the diameter 44 of the spray 34 at the point that it evaporates is now less than the diameter 40 of the pipe 30. There is therefore incomplete mixing of the reducing agent within the increased velocity exhaust flow in the conventional spray arrangement of Figures 3 and 4. Further it is noted that in its gaseous form, the reducing agent now requires a long distance of exhaust pipe to fully mix with the exhaust gases. In restricted space environments, for example the underside of a car, it is often not possible to provide enough pipe length between catalysts to achieve full mixing.

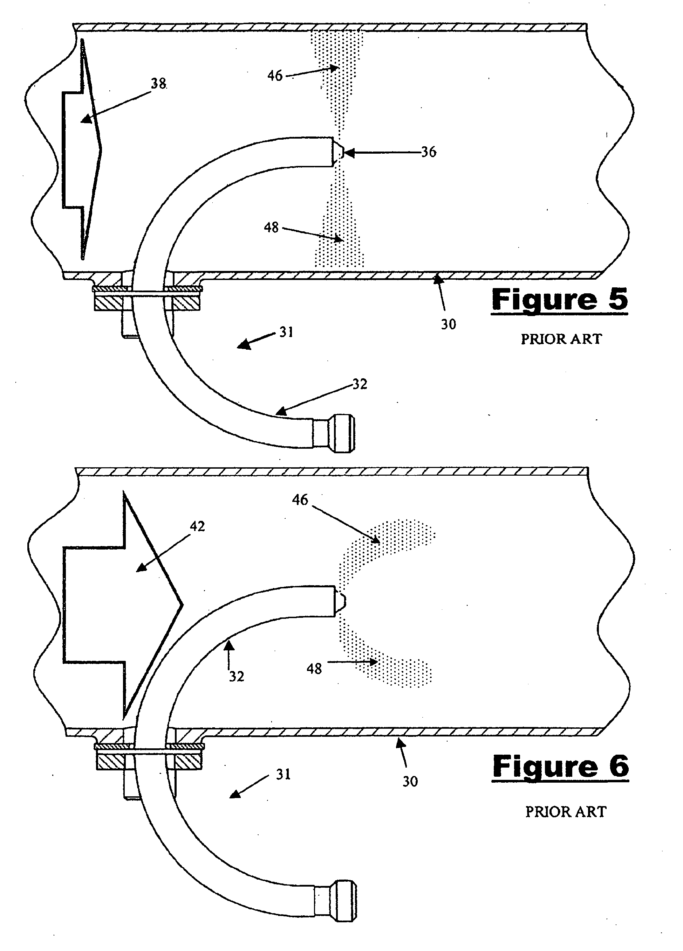

Figure 5 shows a further known arrangement for introducing a reducing agent into an exhaust flow. In Figure 5, a generally C shaped injection device 31 once again passes through the wall of the exhaust pipe 30 such that the nozzle 36 is generally in the centre of the pipe 30. The direction of the exhaust gas flow rate is once again indicated by arrow 38. The velocity of the exhaust gas flow is relatively low (as indicated by the size of the arrow 38).

In Figure 5 however the nozzle is arranged to introduce the reducing agent in two or more separate sprays 46, 48. The reducing agent in this case is introduced perpendicular to the direction of the exhaust gas flow. Such an arrangement is shown in DE10060808.

It can be seen in Figure 5 that the injection device 31 is optimised to introduce the reducing agent at this low flow velocity since the sprays 46, 48 extend to the walls of the pipe 30.

Figure 6 shows the same arrangement as Figure 5. In Figure 6 however the velocity of the exhaust gas flow has increased as indicated by the larger arrow 42. The reducing agent sprays 46, 48 are deflected in this higher velocity exhaust gas flow such that there is no longer complete mixing of the spray with the exhaust gases before the spray evaporates.

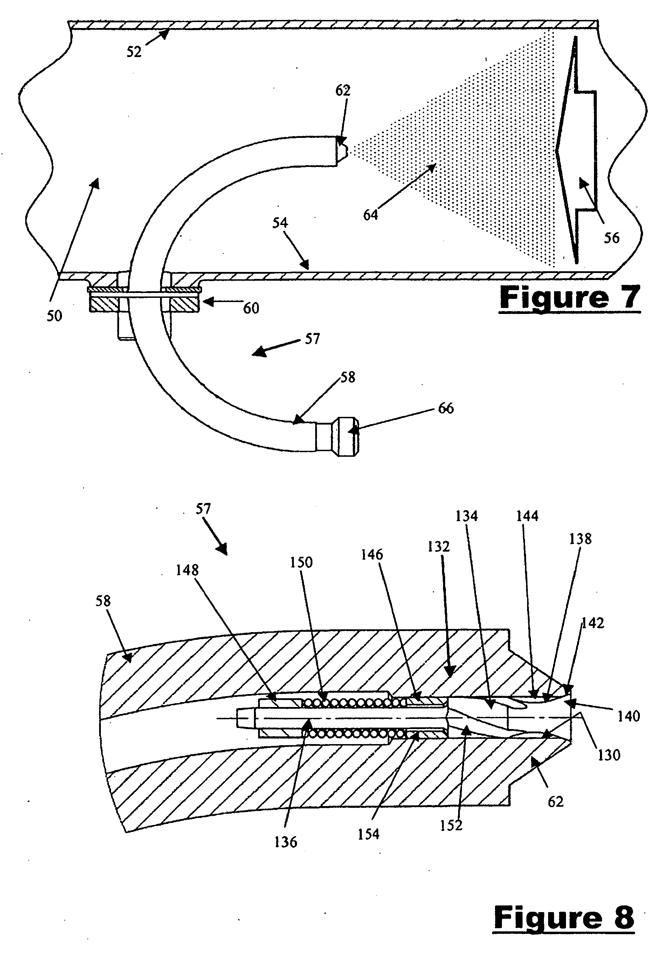

Figure 7 shows an arrangement for introducing a reducing agent into an exhaust flow in accordance with the first aspect of the present invention. Figure 7 shows a section through an exhaust pipe 50. Upper 52 and lower 54 pipe walls are visible.

Exhaust gases flow through the pipe 50 in a generally right to left direction as indicated by the arrow 56.

An injection device 57, comprising a nozzle body 58, in accordance with an embodiment of the present invention is shown entering the pipe 50 through the lower pipe wall 54. A sealing arrangement 60 clamps the injection device 58 in place and ensures that no exhaust gases can escape at the point where the device 58 enters the pipe 50.

The injection device 58 comprises a nozzle 62 which injects reducing agent 64 into the centre of the pipe 50 in a direction that opposes the direction 56 of exhaust gas flow within the pipe 50. The injection device 58 is substantially C shaped. End 66 of the injection device is in fluid communication with a source (not shown) of reducing agent, e.g. the urea tank 13 of Figure 1. A bore (not shown in Figure 7) runs through the nozzle body 58 such that a fluid communication path exists between the fluid source/end 66 and the nozzle 62.

The spray 64 introduced into the pipe 50 by the injection arrangement (58, 62) is optimised to substantially reach the full cross section of the exhaust pipe 50.

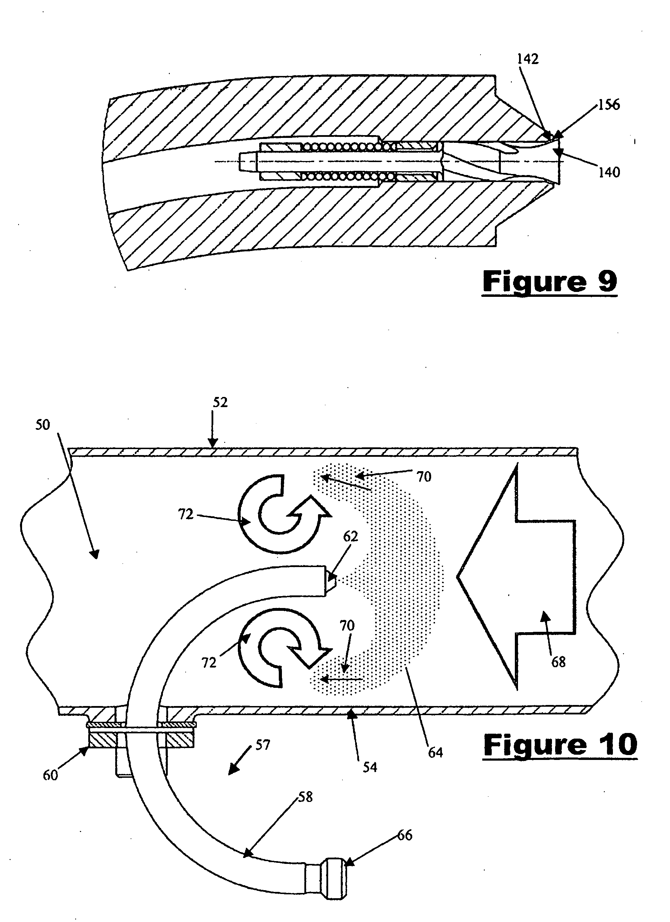

The nozzle 62 of the injection device shown in Figure 7 comprises a valve arrangement. For ease of reference and the clarity of the drawings the valve arrangement is not shown in Figure 7 but is depicted in Figures 8 and 9.

Turning to Figure 8, a cross section through the injection device 57 is shown in the region of the nozzle 62. The nozzle body 58/nozzle 62 comprises a nozzle bore 130 within which a nozzle valve element (indicated generally as 132) is located.

The nozzle valve element 132 comprises a piston 134 located towards the end of the nozzle bore 130 and a shaft 136 located on the other side of the piston 134 than the tip of the nozzle 62. The piston 134 is generally a close clearance fit in the nozzle bore 130 such that the nozzle valve element 132 may slide within the nozzle bore. An annular grove 138 is provided in a downstream portion of the piston 134 and the nozzle bore 130. An end of the piston 134 adjacent the tip of the nozzle 62 is flared outwards to define a valve surface 140 of the piston having a diameter greater than the nozzle bore 130. The nozzle bore 130 adjacent the tip of the nozzle is flared to define a sealing surface 142 complementary to the shape of the valve surface 140 of the piston. A nozzle chamber 144 is defined by the annular grove 138 and the bore 130 of the nozzle.

The end of the piston 134 distant from the tip of the nozzle is attached to the shaft 136 of the valve nozzle element 132. A bush 146 is provided within the nozzle bore 130, and the shaft 136 is a clearance fit within the bush 146. The shaft extends into the bore of the injection device. A retaining collar 148 is carried on and fixed to the shaft 136 close to the end of the shaft distant from the piston. A nozzle spring 150, comprising a compression spring, is disposed between the retaining collar 148 and the bush 148 so as to bias the valve surface 140 of the piston against the sealing surface 142 of the nozzle.

Helical grooves 152 are provided on an upstream portion of the piston to define helical passages between the piston 134 and the nozzle bore 130. The source of reducing agent is therefore in communication with the tip of the nozzle by way of the helical passages 152 and a clearance 154 between the shaft and the bush.

Referring to Figures 8 and 9, as reducing agent is pumped from the source of reducing agent through the bore 130 of the injection device 57, an increase in pressure of the reducing agent is experienced in the nozzle chamber 144 of the nozzle 62. The pressure of the reducing agent within the nozzle chamber 144 acts upon the valve surface 140 of the piston so as to impart a force on the valve nozzle element 132 opposed to the biasing force of the nozzle spring 150. When the pressure of reagent exceeds a threshold value, the force acting on the valve nozzle element 132 due to the reducing agent pressure is sufficient to overcome the biasing force of the nozzle spring 150 and to create a clearance 156 between the valve surface 140 of the piston and the sealing surface 142 of the nozzle (Figure 9).

When the valve nozzle element is in an open position (the position described above in relation to Figure 9), reducing agent is expelled from the nozzle 62 by way of the clearance 156. The size of the clearance and the shape of the sealing surface 142 and valve surface 140 are adapted so that, upon expulsion of the reducing agent, the reducing agent forms a hollow conical spray to aid dispersion and mixing of the reducing agent within the exhaust gas stream.

The nozzle valve element 132 described above has the advantage that no reducing agent is exposed to the exhaust gases when the nozzle is not injecting. This reduces the chance of the reducing agent decomposing and blocking the nozzle 62 (or any exhaust contaminants blocking it). It is noted that the movement of the nozzle as it opens tends to be self-cleaning. The hollow conical spray produced is also likely to mix better than the individual sprays in the prior art.

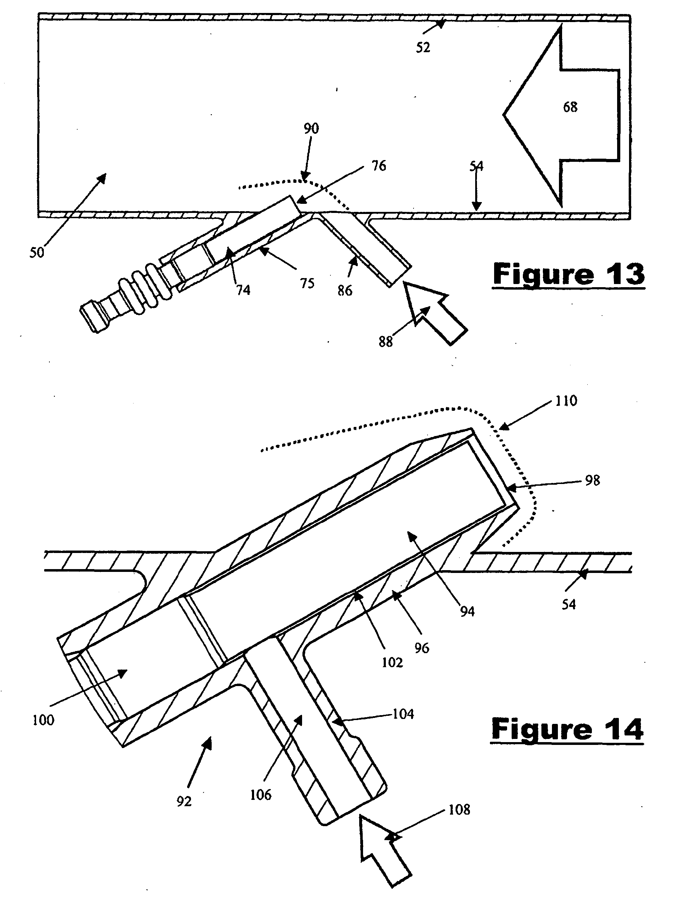

It is noted that the nozzle valve element 132 described in relation to Figures 8 and 9 is located in the nozzle 62 of each of the arrangements shown in Figures 7 & 10-12. It may also additionally be located in the arrangements depicted Figures 13 to 15 relating to the second aspect of the present invention.

Figure 10 shows the same injection arrangement (58, 62) of Figure 7. In this Figure however the exhaust gas flow has a greater velocity than in Figure 7. This greater velocity flow is indicated by arrow 68. It is noted that the direction of the exhaust flow remains from right to left in the Figure.

In the higher velocity flow of Figure 10 the spray 64 of reducing agent that is introduced from the nozzle 62 of the injection device 57 is deflected backwards (relative to its injection direction) such that the direction of the spray 64 begins to approximate the direction of the exhaust flow (the changed direction of the spray 64 being indicated by the arrows 70).

It is noted however that, as the distance the spray 64 travels before reaching the walls 52, 54 of the pipe 50 is not substantially altered, the spray 64 still substantially fills the full pipe cross section.

There is a high differential velocity between the spray 64 and the exhaust gas flow 68 at the centre of the pipe in the arrangement of Figure 10. Close to the pipe walls however there is a low differential velocity between the spray 64 and the exhaust gas flow 68. This varying velocity differential across the pipe 50 results in the formation of vortices 72 downstream from the nozzle 62 of the injection device 57. These vortices 72 act to provide further mixing of the reducing agent 64 with the exhaust gases. It is noted that since these vortices are only generated while the injection device is spraying reducing agent much less energy is required to create them than is the case if the turbulence is generated by deflecting the exhaust gases directly (by for example using an arrangement similar to that shown in DE10060808).

To achieve the most even mixing it is advantageous to inject reducing agent into the centre of the exhaust pipe as shown in Figures 7 and 10. However, this may be undesirable for reasons of heat management and it is noted that heating of the nozzle of the injection device by the exhaust gases can result in the urea solution exceeding the temperature (around 70°C) at which crystals precipitate out of it.

To reduce heating of the nozzle and injection device it is known to inject reducing agent from close to the wall of the pipe. An example of this arrangement is shown in DE 19856366.

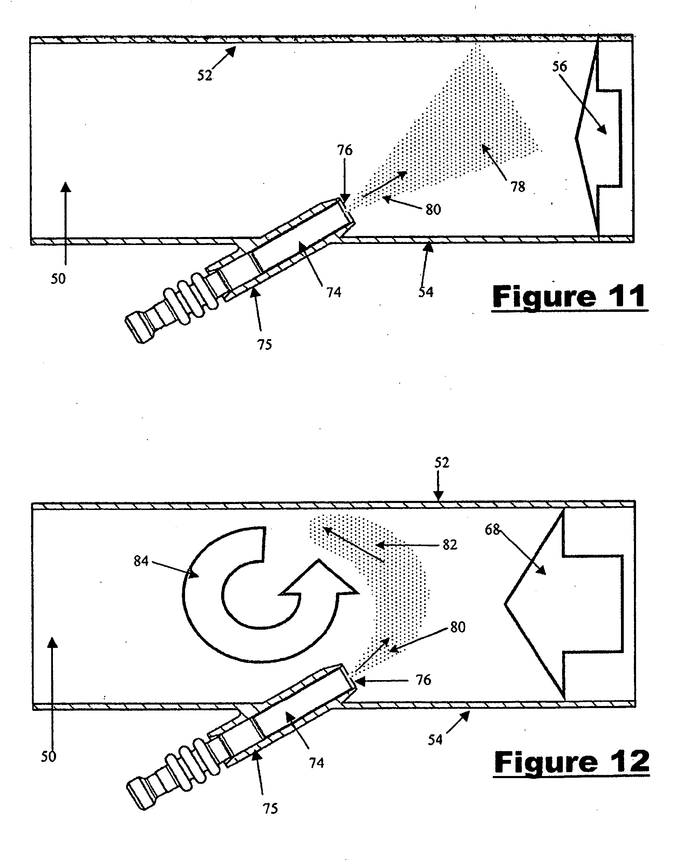

An embodiment of the present invention in which reducing agent is introduced from close to one of the walls of the exhaust pipe is shown in Figures 11 and 12.

In Figure 11 and 12, reducing agent is introduced into the pipe 50 from a linearly shaped injection device 74. The nozzle 76 of this device 74 is shown to be closer to the lower wall 54 of the pipe 50 than the centre of the pipe. The axis of the injection device 74 is orientated such that the spray 78 of reducing agent from the nozzle 76 has an injection direction 80 with a substantial component that opposes the direction 56 of the exhaust gas flow. The angle between the injection device and the axis of the pipe may generally be in the range 15-45 degrees to ensure good mixing of the reducing agent with the exhaust gases.

The nozzle 74 is mounted and received in a complementary shaped port 75 formed by the lower wall 54 of the pipe 50.

Figure 11 shows a pipe 50 in which the exhaust gases have a relatively low velocity. It can be seen from this Figure that the injection arrangement (74, 76) is optimised to produce a spray 78 that substantially fills the entire cross section of the pipe.

Figure 12 shows the same arrangement as in Figure 11 except that the velocity of the exhaust gas flow is relatively higher (as indicated by the larger arrow 68).

The initial injection direction 80 is the same as in Figure 11 but the increased exhaust gas flow velocity causes the spray 78 to curl backwards until the spray direction changes (as indicated by arrow 82) such that it has a component that is travelling in the same direction as the exhaust gas flow.

It is noted however that the fact that the initial injection occurs substantially against the flow of exhaust gas means that the spray 78 still substantially fills the cross section of the pipe 50. The relatively high velocity differential between the spray 78 and the exhaust gases at the bottom of the pipe 50 (as shown in the orientation illustrated in Figures 11 and 12) and the relatively low differential velocity between the spray and exhaust gases at the top of the pipe (as shown in the orientation shown in Figures 11 and 12) generates a vortex 84 which further aids mixing of the spray and the exhaust gas.

As noted above, the exhaust flow from an engine may contain contaminants. Furthermore, it is possible for material to deposit out of the reducing agent once it has been injected into the exhaust pipe. Such contaminants and materials may deposit onto the nozzle of an injection device thereby having an adverse affect on the ability of the injection device to form a spray of reducing agent. Such a problem is particularly relevant in the case of the present invention where reducing agent is injected counter to the exhaust flow direction.

Figures 13 to 15 show various injection device arrangements designed to reduce the chance of material depositing onto the nozzle of the injection device in accordance with the second aspect of the present invention. It is noted that the arrangements shown in Figures 13-15 may also include the valve arrangement described above in relation to Figures 8 and 9.

Figure 13 shows a first arrangement which is generally similar to that depicted in Figure 12 (it is noted that like numerals have been used to denote like features between Figures 12 and 13). In Figure 13 however the lower pipe wall 54 defines a further injection means 86 located upstream from the injection device 74.

Injection means 86 (air inlet 86) is arranged to introduce a flow of air 88 into the exhaust pipe 50 in substantially the direction of the exhaust flow 68. This air flow 88 forms a pocket 90 of clean air around the nozzle 76 of the injection device 74 thereby reducing the risk of material deposits forming on the nozzle 76 opening.

Figure 14 shows an alternative design for the injection device 74 shown in Figure 13. Figure 14 therefore shows an injection arrangement 92 in which an injection device 94 is mounted and received in a substantially complementary shaped port 96 formed by the lower wall 54 of the pipe 50. The injection device comprises a nozzle 98 within the pipe 50 and serves to convey reducing agent from a source of reducing agent (not shown) to the pipe 50 (the direction of reducing agent being generally indicated by the arrow 100).

An annular clearance 102 surrounds the injection device 94 as defined by the outer surface of the injection device 94 and the inner surface of the socket 96.

The port 96 further comprises an air inlet 104 having an air supply bore 106 that connects the annular clearance 102 to a source of air (indicated by the air flow arrow 108).

The air inlet 104, clearance 102 and source of air together form an air supply means that, in use allows air to flow through the air supply passage 106 and the annular passage 102 to the nozzle opening 98. This flow of air once again forms a pocket 110 of relatively clean air around the injection device 94 and the nozzle 98 thereby reducing the risk that deposits will form on the nozzle 98 and impair injection performance.

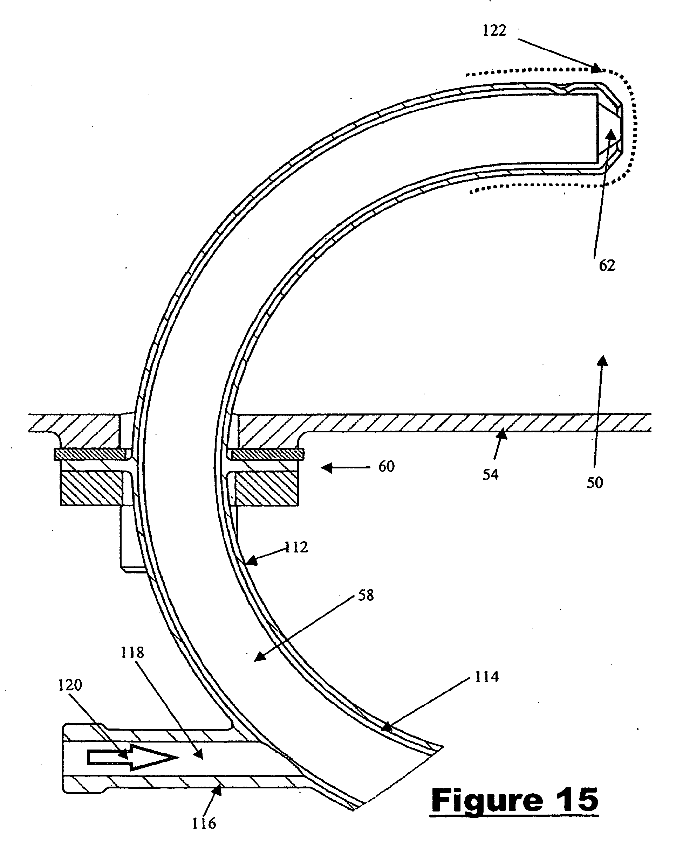

Figure 15 shows a variation of the injection device arrangement of Figures 5 and 6 (it is noted that like numerals have been used to denote like features between Figures 5, 6 and 15).

In Figure 15, the injection device 58 is surrounded by a sleeve 112. The sleeve is clamped in position by the sealing arrangement 60. The sleeve 112 is designed such that a gap 114 is defined between the inner surface of the sleeve 112 and the outer surface of the injection device 58.

An air inlet 116, comprising an air supply bore 118, is defined by the sleeve member 112 which serves to connect the gap 114 to a source of air (not shown in Figure 15).

The source of air and gap 114 together form an air supply means and, in use, a flow of air 120 is passed through the air supply bore 118 and gap 114 to the region of the nozzle 62 of the injection device 58. In this manner a pocket 122 of relatively clean air is formed around the nozzle region of the injection device 58.

It is noted that as a relatively low pressure of air is needed to form the air pockets of Figures 13-15, it may conveniently be bled from anywhere in the inlet passages of the engine downstream of the turbocharger's compressor wheel.

It is also noted in the embodiments of Figures 13-15 that the air serves to reduce the temperature of the nozzle (76, 98, 62) which further minimises the tendency for crystals to from in the reducing agent solution within the nozzle.

The embodiments of the present invention described above are illustrated injecting into straight, parallel sided sections of the exhaust. However, it will be appreciated by the skilled person that the same principles can be applied for injection into a bend of the exhaust pipe and/or into a pipe of varying cross section. If required, the pipe cross-section can be deliberately varied near the point of injection of the reducing agent in order to optimise the exhaust velocity to achieve the best spray missing. For instance, the spray could be introduced into the throat region of a venturi in order to inject into a high velocity exhaust flow without generating excessive back pressure.

It will be understood that the embodiments described above are given by way of example only and are not intended to limit the invention, the scope of which is defined in the appended claims. It will also be understood that the embodiments described may be used individually or in combination.

## Claims

1. An exhaust pipe for a gas flow having a given flow direction, and a fluid dosing device (57) for introducing a fluid into the gas flow, the dosing device comprising:
input means (66) for receiving the fluid from a source of fluid;
nozzle means (62) for injecting the fluid into the gas flow, the nozzle means (62) comprising valve means (132) arranged to move between a first position in which the valve means (132) seals the nozzle means (62) and a second open position in which injection of fluid into the gas flow can take place;
wherein the fluid dosing device (57) is arranged to inject fluid into the gas flow in a direction which is substantially counter to the flow direction of the gas flow.

2. An exhaust pipe as claimed in Claim 1, wherein the nozzle means (62) comprises a sealing surface (142) and the valve means (132) comprises a valve surface (140) of complementary shape to the sealing surface (142), the valve surface (140) acting to close the sealing surface of the nozzle means (62) in the first position so as to prevent expulsion of fluid from the nozzle means (62).

3. An exhaust pipe as claimed in either Claim 1 or Claim 2, wherein the valve means (132) comprises a biasing means (150) arranged to bias the valve means (132) towards the first position.

4. An exhaust pipe as claimed in Claim 3 arranged so that, in use, fluid within the fluid dosing device (57) provides a force opposed to the bias of the biasing means (150) to move the valve means (132) to the second position when the pressure of fluid within the fluid dosing device (57) exceeds a threshold pressure.

5. An exhaust pipe as claimed in any preceding claim, wherein the valve means (132) and nozzle means (62) are arranged to be shaped such that, in the second position, fluid is injected from the nozzle means (62) in the form of a hollow conical spray.

6. An exhaust pipe as claimed in any preceding claim, further comprising air supply means (86, 102, 104) arranged to inject air into the gas flow in the region of the nozzle means (62).

7. An exhaust pipe as claimed in Claim 6, wherein the fluid dosing device (57) is arranged to be received in a complementary shaped mounting (75, 96) such that the fluid dosing device (57) and mounting (75, 96) define an air gap (102, 114) around the dosing device (57), the air gap being in communication with a source of air and the air gap and source of air together forming the air supply means (86, 102, 104), the air supply means arranged to be operable to inject air from the source of air into the gas flow in the region of the nozzle means (62).

8. An exhaust pipe as claimed in any preceding claim, wherein the fluid dosing device (57) is linearly shaped and is received in a complementary shaped mounting (75, 96) formed in a wall (54) of the exhaust pipe (50).

9. An exhaust pipe as claimed in Claim 8, wherein the nozzle means (62) is closer to the wall (54) of the exhaust pipe (50) than the centre of the exhaust pipe (50).

10. An exhaust pipe as claimed in any of Claims 1 to 7, wherein the dosing device is substantially C-shaped, the nozzle means (62) being arranged to be substantially at the centre of the exhaust pipe (50).

11. An exhaust pipe as claimed in any preceding claim, wherein the gas flow comprises NOx-containing exhaust gases.

12. An exhaust pipe (50) as claimed in any preceding claim, wherein the pipe comprises a mounting arrangement (75, 96) defining a bore for receiving the fluid dosing device (57), the mounting arrangement being arranged such that the fluid dosing device (57) injects fluid into the exhaust pipe (50) in a direction which is substantially counter to the flow direction.

13. An exhaust pipe as claimed in Claim 12, further comprising an air supply means (86, 102, 104), the air supply means comprising an air inlet means (86) formed in a wall (54) of the exhaust pipe (50) and being located upstream of the nozzle means (62) of the fluid dosing device (57) and a source of air, the air inlet means (86) being arranged to inject air from the source of air into the exhaust pipe (50) such that a pocket of air is formed in the region of the nozzle means (62) of the fluid dosing device (57).

14. An exhaust pipe as claimed in Claim 12, further comprising an air supply means (86, 102, 104), the air supply means comprising a clearance (102, 114) defined between an outer surface of the fluid dosing device (57) and an inner surface of the bore of the mounting arrangement and a source of air, wherein the clearance (102, 114) is arranged to be open to the exhaust pipe (50) in the region of the nozzle means (62) and in communication with the source of air and the air supply means (86, 102, 104) is arranged such that air from the source of air is injected into the pipe to form a pocket of air in the region of the nozzle means (62) of the fluid dosing device (57).

15. A catalytic reduction system comprising
an exhaust pipe (50) as claimed in any of Claims I to 14, and;
at least one selective catalytic reduction converter (9), said converter being located in the exhaust pipe (50) downstream of the fluid dosing device (57).

16. A catalytic reduction system as claimed in Claim 15, further comprising
a reducing-agent reservoir for holding a reducing agent, and;
a reducing-agent pump for delivering reducing agent from the reservoir to the fluid dosing device (57).

17. A vehicle comprising a catalytic reduction system as claimed in Claim 15 or 16.

18. A method of using a fluid dosing device (57) to introduce a fluid into a gas flow having a given flow direction, the fluid dosing device comprising:
input means (66) for receiving the fluid from a source of fluid;
nozzle means (62) for injecting the fluid into the gas flow, the nozzle means (62) comprising valve means (132) arranged to move between a first position in which the valve means (132) seals the nozzle means (62) and a second open position in which injection of fluid into the gas flow can take place;
the method comprising:
receiving fluid from a source of fluid;
injecting the fluid into the gas flow;
wherein the fluid is injected into the gas flow in a direction which is substantially counter to the flow direction of the gas flow.

19. A method as claimed in Claim 18, wherein the fluid is a reducing agent and the gas flow is conveyed within an exhaust pipe and comprises NOx-containing gases.

20. A data carrier comprising a computer program arranged to configure a fluid dosing device (57) to implement the method according to Claim 18 or 19.

21. An engine management system for a vehicle arranged to configure a fluid dosing device (57) of an exhaust pipe according to any one of Claims 1 to 14 to implement the method according to Claim 18 or 19.

## Patentansprüche

1. Abgasrohr für einen Gasstrom mit einer bestimmten Strömungsrichtung und Fluiddosiervorrichtung (57) zum Einführen eines Fluids in den Gasstrom, wobei die Dosiervorrichtung Folgendes umfasst:
ein Eingabemittel (66) zum Aufnehmen des Fluids aus einer Fluidquelle;
eine Düse (62) zum Einspritzen des Fluids in den Gasstrom, wobei die Düse (62) ein Ventilmittel (132) aufweist, das zur Bewegung zwischen einer ersten Stellung, in der das Ventilmittel (132) die Düse (62) abdichtet, und einer zweiten, offenen Stellung, in der die Fluideinspritzung in den Gasstrom stattfinden kann, angeordnet ist;
wobei die Fluiddosiervorrichtung (57) zum Einspritzen von Fluid in den Gasstrom in einer Richtung angeordnet ist, die der Strömungsrichtung des Gasstroms im Wesentlichen entgegengesetzt ist.

2. Abgasrohr nach Anspruch 1, bei der die Düse (62) eine Dichtfläche (142) umfasst und das Ventilmittel (132) eine Ventilfläche (140) mit zur Dichtungsfläche (142) komplementärer Form umfasst, wobei die Ventilfläche (140) zum Schließen der Dichtfläche der Düse (62) in der ersten Stellung wirkt, um das Ausstoßen von Fluid aus der Düse (62) zu verhindern.

3. Abgasrohr nach Anspruch 1 oder Anspruch 2, bei dem das Ventilmittel (132) ein Vorspannmittel (150) umfasst, das zum Vorspannen des Ventilmittels (132) in Richtung auf die erste Stellung angeordnet ist.

4. Abgasrohr nach Anspruch 3, das so angeordnet ist, dass im Gebrauch Fluid in der Fluiddosiervorrichtung (57) eine Kraft bereitstellt, die der Vorspannung des Vorspannmittels (150) entgegengesetzt ist, um das Ventilmittel (132) in die zweite Stellung zu bewegen, wenn der Fluiddruck in der Fluiddosiervorrichtung (57) einen Druckschwellenwert übersteigt.

5. Abgasrohr nach einem der vorhergehenden Ansprüche, bei dem das Ventilmittel (132) und die Düse (62) so angeordnet sind, dass sie so gestaltet sind, dass in der zweiten Stellung Fluid in der Form eines hohlen konischen Sprays aus der Düse (62) gespritzt wird.

6. Abgasrohr nach einem der vorhergehenden Ansprüche, das ferner Luftzuleitungsmittel (86, 102, 104) umfasst, die zum Einblasen von Luft in den Gasstrom im Bereich der Düse (62) angeordnet sind.

7. Abgasrohr nach Anspruch 6, bei dem die Fluiddosiervorrichtung (57) zur Aufnahme in einer komplementär geformten Halterung (75, 96) angeordnet ist, so dass die Fluiddosiervorrichtung (57) und die Halterung (75, 96) einen Luftspalt (102, 114) um die Dosiervorrichtung (57) definieren, wobei der Luftspalt mit einer Luftquelle in Verbindung ist und der Luftspalt und die Luftquelle zusammen die Luftzuleitungsmittel (86, 102, 104) bilden, wobei die Luftzuleitungsmittel angeordnet sind, um Luft aus der Luftquelle in den Gasstrom im Bereich der Düse (62) einzublasen.

8. Abgasrohr nach einem der vorhergehenden Ansprüche, bei dem die Fluiddosiervorrichtung (57) eine lineare Form hat und in einer in einer Wand (54) des Abgasrohrs (50) gebildeten, komplementär gestalteten Halterung (75, 96) aufgenommen ist.

9. Abgasrohr nach Anspruch 8, bei dem die Düse (62) der Wand (54) des Abgasrohrs (50) näher ist als der Mitte des Abgasrohrs (50).

10. Abgasrohr nach einem der Ansprüche 1 bis 7, bei dem die Dosiervorrichtung im Wesentlichen C-förmig ist, wobei die Düse (62) so angeordnet ist, dass sie sich im Wesentlichen in der Mitte des Abgasrohrs (50) befindet.

11. Abgasrohr nach einem der vorhergehenden Ansprüche, bei dem der Gasstrom NOx-haltige Abgase umfasst.

12. Abgasrohr (50) nach einem der vorhergehenden Ansprüche, bei dem das Rohr eine Halterungsanordnung (75, 96) umfasst, die eine Bohrung zum Aufnehmen der Fluiddosiervorrichtung (57) definiert, wobei die Halterungsanordnung so angeordnet ist, dass die Fluiddosiervorrichtung (57) Fluid in einer Richtung, die der Strömungsrichtung im Wesentlichen entgegengesetzt ist, in das Abgasrohr (50) einspritzt.

13. Abgasrohr nach Anspruch 12, das ferner ein Luftzuleitungsmittel (86, 102, 104) umfasst, wobei das Luftzuleitungsmittel ein Lufteinlassmittel (86), das in einer Wand (54) des Abgasrohrs (50) gebildet ist und sich in Strömungsrichtung vor der Düse (62) der Fluiddosiervorrichtung (75) befindet, und eine Luftquelle umfasst, wobei das Lufteinlassmittel (86) zum Einblasen von Luft aus der Luftquelle in das Abgasrohr (50) angeordnet ist, so dass im Bereich der Düse (62) der Fluiddosiervorrichtung (57) ein Luftloch gebildet wird.

14. Abgasrohr nach Anspruch 12, das ferner ein Luftzuleitungsmittel (86, 102, 104) umfasst, wobei das Luftzuleitungsmittel einen Freiraum (102, 114), der zwischen einer Außenfläche der Fluiddosiervorrichtung (57) und einer Innenfläche der Bohrung der Halterungsanordnung definiert ist, und eine Luftquelle umfasst, wobei der Freiraum (102, 114) so angeordnet ist, dass er im Bereich der Düse (62) zum Abgasrohr (50) offen und mit der Luftquelle in Verbindung ist, und das Luftzuleitungsmittel (86, 102, 104) so angeordnet ist, dass Luft aus der Luftquelle in das Rohr geblasen wird, um im Bereich der Düse (62) der Fluiddosiervorrichtung (57) ein Luftloch zu bilden.

15. Katalytisches Reduktionssystem, umfassend:
ein Abgasrohr (50) nach einem der Ansprüche 1 bis 14;
wenigstens einen SCR-Katalysator (9) für die selektive katalytische Reduktion (SCR), wobei der genannte Katalysator sich im Abgasrohr (50) in Strömungsrichtung hinter der Fluiddosiervorrichtung (57) befindet.

16. Katalytisches Reduktionssystem nach Anspruch 15, ferner umfassend:
einen Reduziermittelbehälter zum Aufnehmen eines Reduziermittels und
eine Reduziermittelpumpe zum Fördern von Reduziermittel aus dem Behälter zur Fluiddosiervorrichtung (57).

17. Fahrzeug, umfassend ein katalytisches Reduktionssystem nach Anspruch 15 oder 16.

18. Verfahren zur Verwendung einer Fluiddosiervorrichtung (57) zum Einführen eines Fluids in einen Gasstrom mit einer bestimmten Strömungsrichtung, wobei die Fluiddosiervorrichtung Folgendes umfasst:
ein Eingabemittel (66) zum Aufnehmen des Fluids aus einer Fluidquelle;
eine Düse (62) zum Einspritzen des Fluids in den Gasstrom, wobei die Düse (62) ein Ventilmittel (132) aufweist, das zur Bewegung zwischen einer ersten Stellung, in der das Ventilmittel (132) die Düse (62) abdichtet, und einer zweiten, offenen Stellung, in der die Fluideinspritzung in den Gasstrom stattfinden kann, angeordnet ist;
wobei das Verfahren Folgendes umfasst:
Aufnehmen von Fluid aus einer Fluidquelle;
Einspritzen des Fluids in den Gasstrom;
wobei das Fluid in einer Richtung in den Gasstrom eingespritzt wird, die der Strömungsrichtung des Gasstroms im Wesentlichen entgegengesetzt ist.

19. Verfahren nach Anspruch 18, bei dem das Fluid ein Reduziermittel ist und der Gasstrom in einem Abgasrohr geleitet wird und NOx-haltige Gase umfasst.

20. Datenträger, umfassend ein Computerprogramm zum Konfigurieren einer Fluiddosiervorrichtung (57) zum Ausführen des Verfahrens nach Anspruch 18 oder 19.

21. Motormanagementsystem für ein Fahrzeug, das zum Konfigurieren einer Fluiddosiervorrichtung (57) eines Abgasrohrs nach einem der Ansprüche 1 bis 14 zum Ausführen des Verfahrens nach Anspruch 18 oder 19 angeordnet ist.

## Revendications

1. Tube d'échappement pour un flux de gaz ayant une direction d'écoulement donnée, et un dispositif de dosage de fluide (57) pour introduire un fluide dans le flux de gaz, le dispositif de dosage comprenant :
des moyens d'entrée (66) pour recevoir le fluide depuis une source de fluide ;
des moyens formant buse (62) pour injecter le fluide dans le flux de gaz, les moyens formant buse (62) comprenant des moyens formant valve (132) agencés pour se déplacer entre une première position dans laquelle les moyens formant valve (132) isolent les moyens formant buse (62) et une seconde position ouverte dans laquelle une injection de fluide dans le flux de gaz peut avoir lieu ;
dans lequel le dispositif de dosage de fluide (57) est agencé pour injecter un fluide dans le flux de gaz dans une direction qui est sensiblement contraire à la direction d'écoulement du flux de gaz.

2. Tube d'échappement selon la revendication 1, dans lequel les moyens formant buse (62) comprennent une surface de fermeture (142) et les moyens formant valve (132) comprennent une surface de valve (140) de forme complémentaire à la surface de fermeture (142), la surface de valve (140) agissant pour fermer la surface de fermeture des moyens formant buse (62) dans la première position de façon à empêcher l'expulsion de fluide depuis les moyens formant buse (62).

3. Tube d'échappement selon la revendication 1 ou 2, dans lequel les moyens formant valve (132) comprennent un moyen de sollicitation (150) agencé pour solliciter les moyens formant valve (132) vers la première position.

4. Tube d'échappement selon la revendication 3, agencé de telle façon que, en utilisation, du fluide à l'intérieur du dispositif de dosage de fluide (57) apporte une force opposée à la sollicitation des moyens de sollicitation (150) pour déplacer les moyens formant valve (132) à la seconde position quand la pression de fluide dans le dispositif de dosage de fluide (57) excède une pression seuil.

5. Tube d'échappement selon l'une quelconque des revendications précédentes, dans lequel les moyens formant valve (132) et les moyens formant buse (62) sont agencés avec une forme telle que, dans la seconde position, le fluide est injecté depuis les moyens formant buse (62) sous la forme d'une pulvérisation conique creuse.

6. Tube d'échappement selon l'une quelconque des revendications précédentes, comprenant en outre des moyens d'alimentation d'air (86, 102, 104) agencés pour injecter de l'air dans le flux de gaz dans la région des moyens formant buse (62).

7. Tube d'échappement selon la revendication 6, dans lequel le dispositif de dosage de fluide (57) est agencé pour être reçu dans une monture de forme complémentaire (75, 96), de telle façon que le dispositif de dosage de fluide (57) et la monture (75, 96) définissent un intervalle d'air (102, 114) autour du dispositif de dosage (57), l'intervalle d'air étant en communication avec une source d'air, et l'intervalle d'air et la source d'air formant ensemble les moyens d'alimentation d'air (86, 102, 104), les moyens d'alimentation d'air étant agencés afin de fonctionner pour injecter de l'air depuis la source d'air jusque dans le flux de gaz dans la région des moyens formant buse (62).

8. Tube d'échappement selon l'une quelconque des revendications précédentes, dans lequel le dispositif de dosage de fluide (57) est de forme linéaire et est reçu dans une monture de forme correspondante (75, 96) formée dans une paroi (54) du tube d'échappement (50).

9. Tube d'échappement selon la revendication 8, dans lequel les moyens formant buse (62) sont plus proches de la paroi (54) du tube d'échappement (50) que du centre du tube d'échappement (50).

10. Tube d'échappement selon l'une quelconque des revendications 1 à 7, dans lequel le dispositif de dosage est sensiblement en forme de C, les moyens formant buse (62) étant agencés pour être sensiblement au centre du tube d'échappement (50).

11. Tube d'échappement selon l'une quelconque des revendications précédentes, dans lequel le flux de gaz comprend des gaz d'échappement contenant des NOx.

12. Tube d'échappement (50) selon l'une quelconque des revendications précédentes, dans lequel le tube comprend un agencement de montage (75, 96) définissant un perçage pour recevoir le dispositif de dosage de fluide (57), le dispositif de montage étant agencé de telle façon que le dispositif de dosage de fluide (57) injecte du fluide dans le tube d'échappement (50) dans une direction qui est sensiblement contraire à la direction d'écoulement.

13. Tube d'échappement selon la revendication 12, comprenant en outre des moyens d'alimentation d'air (86, 102, 104), les moyens d'alimentation d'air comprenant une entrée d'air (86) formée dans une paroi (54) du tube d'échappement (50) et située en amont des moyens formant buse (62) du dispositif de dosage de fluide (57) et une source d'air, l'entrée d'air (86) étant agencée pour injecter de l'air depuis la source d'air jusque dans le tube d'échappement (50) de telle façon qu'une poche d'air se forme dans la région des moyens formant buse (62) de l'appareil de dosage de fluide (57).

14. Tube d'échappement selon la revendication 12, comprenant en outre des moyens d'alimentation d'air (86, 102, 104), les moyens d'alimentation d'air comprenant un jeu (102, 114) défini entre une surface extérieure du dispositif de dosage de fluide (57) et une surface intérieure du perçage de l'agencement de montage, et une source d'air,
dans lequel le jeu (102, 114) est agencé pour s'ouvrir vers le tube d'échappement (50) dans la région des moyens formant buse (62) et en communication avec la source d'air, et les moyens d'alimentation d'air (86, 102, 104) sont agencés de telle façon que l'air provenant de la source d'air est injecté dans le tube pour former une poche d'air dans la région des moyens formant buse (62) du dispositif de dosage de fluide (57).

15. Système de réduction catalytique, comprenant :
un tube d'échappement (50) selon l'une quelconque des revendications 1 à 14, et
au moins un convertisseur de réduction catalytique sélectif (9), ledit convertisseur étant situé dans le tube d'échappement (50) en aval du dispositif de dosage de fluide (57).

16. Système de réduction catalytique selon la revendication 15, comprenant en outre :
un réservoir d'agent réducteur pour contenir un agent réducteur, et
une pompe d'agent réducteur pour fournir l'agent réducteur depuis le réservoir vers le dispositif de dosage de fluide (57).

17. Véhicule comprenant un système de réduction catalytique selon les revendications 15 ou 16.

18. Procédé d'utilisation d'un dispositif de dosage de fluide (57) pour introduire un fluide dans un flux de gaz ayant une direction d'écoulement donnée, le dispositif de dosage de fluide comprenant :
des moyens d'entrée (66) pour recevoir le fluide depuis une source de fluide ;
des moyens formant buse (62) pour injecter le fluide dans le flux de gaz, les moyens formant buse (62) comprenant des moyens formant valve (132) agencés pour se déplacer entre une première position dans laquelle les moyens formant valve (132) ferment les moyens formant buse (62), et une seconde position ouverte dans laquelle l'injection du fluide dans le flux de gaz peut avoir lieu ;
le procédé comprenant les opérations consistant à :
recevoir du fluide depuis une source de fluide ;
injecter le fluide dans le flux de gaz ;
dans lequel le fluide est injecté dans le flux de gaz dans une direction qui est sensiblement contraire à la direction d'écoulement du flux de gaz.

19. Procédé selon la revendication 18, dans lequel le fluide est un agent réducteur et le flux de gaz est convoyé dans un tube d'échappement et comprend des gaz contenant des NOx.

20. Support de données comprenant un programme d'ordinateur agencé pour configurer un dispositif de dosage de fluide (57) afin de mettre en oeuvre le procédé selon la revendication 18 ou 19.

21. Système de gestion de moteur pour un véhicule, agencé pour configurer un dispositif de dosage de fluide (57) d'un tube d'échappement selon l'une quelconque des revendications 1 à 14 afin de mettre en oeuvre le procédé selon les revendication 18 ou 19.
